(19) Europäisches Patentamt
European Patent Office
Office européen des brevets

(11) Veröffentlichungsnummer: **0 058 864**
**B1**

(12) # EUROPÄISCHE PATENTSCHRIFT

(45) Veröffentlichungstag der Patentschrift: **24.10.84**

(21) Anmeldenummer: **82100895.0**

(22) Anmeldetag: **08.02.82**

(51) Int. Cl.³: **C 07 F 9/165,** C 07 F 9/24, C 07 F 9/40, C 07 F 9/58, A 01 N 57/10, A 01 N 57/18, A 01 N 57/26

(54) **Verfahren zur Herstellung von Phosphorsäurecyanhydrinestern, Phosphorsäurecyanhydrinester, sie enthaltende Schädlingsbekämpfungsmittel und ihre Verwendung.**

(30) Priorität: **21.02.81 DE 3106475**
**12.11.81 DE 3145009**

(43) Veröffentlichungstag der Anmeldung:
**01.09.82 Patentblatt 82/35**

(45) Bekanntmachung des Hinweises auf die Patenterteilung:
**24.10.84 Patentblatt 84/43**

(84) Benannte Vertragsstaaten:
**AT BE CH DE FR GB IT LI NL**

(56) Entgegenhaltungen:
**EP - A - 0 044 214**
**DE - B - 1 047 776**
**US - A - 2 965 533**

**JOURNAL OF GENERAL CHEMISTRY OF THE USSR, Band 45, Nr. 11, Teil 1, 20. April 1976, Plenum Publishing Corp. NEW YORK (US) V.E. SHISHKIN et al: "Alkyl and aryl cyanoalkyl methylphosphonates" Seiten 2369-2371**
**CHEMICAL ABSTRACTS, Band 69, Nr. 17, 21. Oktober 1968, Seite 6310, Zusammenfassung 67489j COLUMBUS, Ohio (US) & Khim. Org. Soedin. Fosfora, Akad. Nauk SSSR, Otd. Obschch. Tekh. Khim. 1967, 45-52**
**SYNTHESIS, International Journal of Methods in Synthetic Organic Chemistry, Nr. 3, März 1978 Georg**

(73) Patentinhaber: **BAYER AG, Konzernverwaltung RP Patentabteilung, D-5090 Leverkusen 1 Bayerwerk (DE)**

(72) Erfinder: **Krüger, Bernd-Wieland, Dr., Sillerstrasse 49, D-5600 Wuppertal 1 (DE)**
Erfinder: **Riebel, Hans-Jochem, Dr., In der Beek 92, D-5600 Wuppertal 1 (DE)**
Erfinder: **Hammann, Ingeborg, Dr., Belfortstrasse 9, D-5000 Köln (DE)**
Erfinder: **Homeyer, Bernhard, Dr., Obere Strasse 28, D-5090 Leverkusen 3 (DE)**
Erfinder: **Stendel, Wilhelm, Dr., In den Birken 55, D-5600 Wuppertal 1 (DE)**

(56) Entgegenhaltungen: (Fortsetzung)
**Thieme Publishers, J.K. RASMUSSEN et al.: "A Facile, One-Pot Synthesis of Silylated Cyanohydrins", Seiten 219-20**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein neues Verfahren zur Herstellung von Phosphorsäurecyanhydrinestern, neue Phosphorsäurecyanhydrinester enthaltende Schädlingsbekämpfungsmittel, ihre Verwendung, insbesondere als Insektizide und Akarizide, sowie neue Phosphorsäurecyanhydrinester.

Es ist bereits bekannt, dass man bestimmte zur Schädlingsbekämpfung verwendbare Phosphorsäurecyanhydrinester erhält, wenn man entsprechende Phosphorsäureesterchloride mit Cyanhydrinen (α-Hydroxycarbonsäurenitrilen) umsetzt (vgl. „Deutsche Auslegeschriften" Nrn. 1047776 und 1224307). Bei diesem Verfahren erhält man die gewünschten Verbindungen jedoch meist in geringen Ausbeuten, die pestizide Wirkung der bisher bekannten Phosphorsäurecyanhydrinester ist zudem unbefriedigend.

Weiter ist bekannt, dass man bestimmte Phosphorsäurecyanhydrinester auch herstellen kann, wenn man die Cyanhydrine *in situ* in der Reaktionsmischung aus Carbonylverbindungen und Alkalimetallcyaniden erzeugt und ohne Zwischenisolierung mit Phosphorsäureesterchloriden umsetzt (vgl. US-Patentschrift Nr. 2965533). Dieses Verfahren, welches ohne den Einsatz eines Phasentransferkatalysators durchgeführt wird, ist jedoch sehr zeitraubend und/oder liefert nur mässige Ausbeuten. Bestimmte Phosphonsäurecyanhydrinester werden, ohne die Angabe eines möglichen Verwendungszweckes, in „Journal of General Chemistry of the USSR", Bd. 45, Nr. 11, Teil 1, 20. April 1976, Plenum Publishing Corp. New York (US), S. 2369-2371, sowie in „Chemical Abstracts", Bd. 69, Nr. 17, 21. Oktober 1968, S. 6310, Zusammenfassung 67489j beschrieben. Ebenso werden bestimmte Phosphor- und Phosphonsäurecyanhydrinester in der EP-A Nr. 0044214 (Union Carbide Corp.), Anmeldetag 10. Juli 1981, Veröffentlichungstag 20. Januar 1982, als Insektizide beschrieben.

Es wurde nun gefunden, dass man Phosphorsäurecyanhydrinester der Formel I:

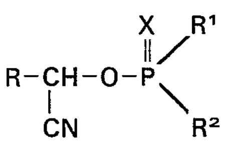

(I)

in welcher

R für Wasserstoff oder für einen gegebenenfalls substituierten Rest aus der Reihe Alkyl, Alkenyl, Alkinyl, Cycloalkyl, Cycloalkenyl, Aralkyl, Aralkenyl und Aryl oder für einen gegebenenfalls substituierten heterocyclischen Rest steht,

$R^1$ und $R^2$ gleich oder verschieden sind und einzeln für gegebenenfalls substituierte Reste aus der Reihe Alkyl, Alkenyl, Alkinyl, Aryl, Aralkyl, Alkoxy, Aryloxy, Aralkoxy, Alkylthio, Alkenylthio, Alkinylthio, Arylthio, Aralkylthio, Mono- und Dialkylamino, Arylamino, Aralkylamino oder gemeinsam für Alkandiyl, Alkandioxy, Iminoalkyloxy oder Alkandiimino stehen, und

X für Sauerstoff oder Schwefel steht,

durch die Umsetzung von Phosphorsäurechloriden der Formel II:

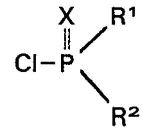

(II)

in welcher

X, $R^1$ und $R^2$ die oben angegebene Bedeutung haben,

mit Aldehyden der Formel III:

$$R-CHO \qquad (III)$$

in welcher

R die oben angegebene Bedeutung hat,

in Gegenwart angenähert äquimolarer Mengen wasserlöslicher Cyanide, in Wasser und in mit Wasser praktisch nicht mischbaren Lösungsmitteln aus der Reihe der Kohlenwasserstoffe bei Temperaturen zwischen 0 und 80° C bei kurzer Reaktionszeit in sehr guten Ausbeuten und Reinheit erhält, wenn man die Umsetzung in Gegenwart eines Phasentransferkatalysators durchführt. Es wurde ferner gefunden, dass die nach dem vorausgehend beschriebenen Verfahren herstellbaren Phosphorsäurecyanhydrinester der Formel Ia:

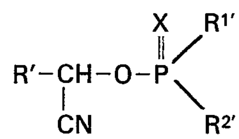

(Ia)

in welcher

R' für Wasserstoff oder für einen Rest aus der Reihe Alkyl, Alkenyl, Alkinyl, Cycloalkyl, Aralkyl, Aryl oder für einen 5- bis 7gliedrigen heteroparaffinischen, heteroaromatischen oder heteroolefinischen Ring mit 1 bis 3 gleichen oder verschiedenen Heteroatomen, wobei die Heteroatome Sauerstoff, Schwefel und Stickstoff sind, steht,

$R^{1'}$ für einen Rest der Reihe Alkoxy, Aryloxy, Aralkoxy, Alkylthio, Arylthio, Aralkylthio, Mono- und Dialkylamino, Arylamino, Aralkylamino, Alkenylthio und Alkinylthio steht,

$R^{2'}$ für einen Rest aus der Reihe Alkyl, Aryl, Aralkyl, Aryloxy, Aralkoxy, Alkylthio, Arylthio, Aralkylthio, Mono- und Dialkylamino, Arylamino, Aralkylamino, Alkenylthio und Alkinylthio steht, wobei die unter den Definitionen von R', $R^{1'}$ und $R^{2'}$ genannten Reste substituiert sein können durch Alkyl mit 1 bis 4 Kohlenstoffatomen; Alkoxy mit 1 bis 4 Kohlenstoffatomen; Alkylthio mit 1 bis 4 Kohlenstoffatomen; Mono- und Dialkylamino mit 1 bis 4 Kohlenstoffatomen je Alkylgruppe; Halogenalkyl, Halogenalkylthio und Halogenalkoxy mit 1 bis 4 Kohlenstoffatomen und 1 bis 5 Halogenatomen; Halogen; Nitro; Alkoxycarbonyl mit 2 bis 4 Kohlenstoffatomen und/oder Phenoxybenzyloxycarbonyl, und wobei weiterhin im Falle von Arylteilen enthaltenden Resten R', $R^{1'}$ und $R^{2'}$ die Arylteile durch Alkylendioxygruppen substituiert sein können, welche 1 bis 3 Kohlenstoffatome enthalten und welche ihrerseits durch 1 bis 4 Halogenatome substituiert sein können, und

X für Sauerstoff oder Schwefel steht, ausgenommen die Verbindungen, in welchen

c) X für Sauerstoff oder Schwefel, $R^{1'}$ für Ethoxy, $R^{2'}$ für n-Propylthio und R' für Phenyl stehen, und

d) X für Sauerstoff, $R^{1'}$ für Ethoxy, $R^{2'}$ für n-Butylthio und R' für Phenyl stehen, und

e) X für Sauerstoff, $R^{1'}$ für Ethoxy, $R^{2'}$ für n-Propylthio und R' für Methyl, Trichlormethyl, i-Propyl, t-Butyl, n-Pentyl, n-Heptyl, 2-Methoxypropyl, 2-Chlorphenyl, 4-Chlorphenyl, 2,4-Dichlorphenyl, 2,6-Dichlorphenyl, 2-Bromphenyl, 3-Fluorphenyl, 4-Fluorphenyl, Pentafluorphenyl, 2-Methylphenyl, 3-Trifluormethylphenyl, 2,3-Dichlor-4-methylphenyl, 2-Nitrophenyl, 3-Nitrophenyl, 2,6-Dichlor-3-nitrophenyl, 4-i-Propylphenyl, 2,4,6-Trimethoxyphenyl, 2-Pyridyl oder 6-Methyl-2-pyridyl stehen,

Eigenschaften aufweisen, die ihre Verwendung als Schädlingsbekämpfungsmittel, insbesondere als Insektizide und Akarizide ermöglichen.

Die Phosphorsäurecyanhydrinester der Formel Ia, in welcher R', $R^{1'}$, $R^{2'}$ und X den zuvor aufgegebenen Definitionen entsprechen, ausgenommen Verbindungen, in welchen

a) X für Sauerstoff, R' für Wasserstoff, $R^{2'}$ für Methyl und $R^{1'}$ für Methoxy, Ethoxy, n- und i-Propoxy, n- und i-Butoxy und Phenoxy stehen,

b) X für Sauerstoff steht und R' für Methyl, $R^{2'}$ für Ethyl und $R^{1'}$ für Ethoxy oder n-Propoxy stehen oder R' für Methyl, $R^{1'}$ für i-Propoxy und $R^{2'}$ für i-Propyl stehen oder R' für Phenyl, $R^{2'}$ für Ethyl und $R^{1'}$ für Ethoxy oder n-Propoxy stehen,

c) X für Sauerstoff oder Schwefel, $R^{1'}$ für Ethoxy, $R^{2'}$ für n-Propylthio und R' für Phenyl stehen,

d) X für Sauerstoff, $R^{1'}$ für Ethoxy, $R^{2'}$ für n-Butylthio und R' für Phenyl stehen, und

e) X für Sauerstoff, $R^{1'}$ für Ethoxy, $R^{2'}$ für n-Propylthio und R' für Methyl, Trichlormethyl, i-Propyl, t-Butyl, n-Pentyl, n-Heptyl, 2-Methoxypropyl, 2-Chlorphenyl, 4-Chlorphenyl, 2,4-Dichlorphenyl, 2,6-Dichlorphenyl, 2-Bromphenyl, 3-Fluorphenyl, 4-Fluorphenyl, Pentafluorphenyl, 2-Methylphenyl, 3-Trifluormethylphenyl, 2,3-Dichlor-4-methylphenyl, 2-Nitrophenyl, 3-Nitrophenyl, 2,6-Dichlor-3-nitrophenyl, 4-i-Propylphenyl, 2,4,6-Trimethoxyphenyl, 2-Pyridyl oder 6-Methyl-2-pyridyl stehen,

sind neu und zeigen gegenüber Verbindungen des Standes der Technik überraschend hohe insektizide und akarizide Wirksamkeiten.

Als gegebenenfalls substituiertes Alkyl R, R', $R^1$, $R^2$ und $R^{2'}$ steht geradkettiges oder verzweigtes Alkyl mit 1 bis 20, vorzugsweise 1 bis 10, insbesondere 1 bis 5 Kohlenstoffatomen. Beispielhaft seien gegebenenfalls substituiertes Methyl, Ethyl, n- und i-Propyl, n-, i- und t-Butyl genannt.

Als gegebenenfalls substituiertes Alkenyl R, R', $R^1$ und $R^2$ sowie Alkenylthio $R^1$, $R^2$, $R^{1'}$ steht geradkettiges oder verzweigtes Alkenyl bzw. Alkenylthio mit vorzugsweise 2 bis 5, insbesondere 2 bis 4 Kohlenstoffatomen. Beispielhaft seien gegebenenfalls substituiertes Ethenyl, Propinyl-(1), Propinyl-(2) und Butenyl-(3) sowie die entsprechenden Thioalkenylreste genannt.

Als gegebenenfalls substituiertes Alkinyl, R, R', $R^1$ und $R^2$ sowie Alkinylthio $R^1$, $R^2$, $R^{1'}$ und $R^{2'}$ steht geradkettiges oder verzweigtes Alkinyl bzw. Alkinylthio mit vorzugsweise 2 bis 5, insbesondere 2 bis 4 Kohlenstoffatomen. Beispielhaft seien gegebenenfalls substituiertes Ethinyl, Propinyl-(1), Propinyl-(2) und Butinyl-(3) sowie die entsprechenden Thioalkinylreste genannt.

Als gegebenenfalls substituiertes Cycloalkyl R und R' steht mono-, bi- und tricyclisches Cycloalkyl mit vorzugsweise 3 bis 8, insbesondere 3, 5 oder 6 Kohlenstoffatomen. Beispielhaft seien gegebenenfalls substituiertes Cyclopropyl, Cyclobutyl, Cyclopentyl, Cyclohexyl, Cycloheptyl, Bicyclo-[2.2.1]-heptyl, Bicyclo-[2.2.2]-octyl und Adamantyl genannt.

Als gegebenenfalls substituiertes Cycloalkenyl R steht vorzugsweise monocyclisches Cycloalkenyl mit 5 oder 6 Kohlenstoffatomen und 1 oder 2 Doppelbindungen.

Als gegebenenfalls substituiertes Alkoxy $R^1$, $R^{1'}$ und $R^2$ steht geradkettiges oder verzweigtes Alkoxy mit vorzugsweise 1 bis 6, insbesondere 1 bis 4 Kohlenstoffatomen. Beispielhaft seien gegebenenfalls substituiertes Methoxy, Ethoxy, n- und i-Propoxy und n-, i- und t-Butoxy genannt.

Als gegebenenfalls substituiertes Alkylthio $R^1$, $R^{1'}$, $R^2$ und $R^{2'}$ steht geradkettiges oder verzweigtes Alkylthio mit vorzugsweise 1 bis 6, insbesondere 1 bis 4 Kohlenstoffatomen. Beispielhaft seien gegebenenfalls substituiertes Methylthio, Ethylthio, n- und i-Propylthio, n-, i- und t-Butylthio genannt.

Als gegebenenfalls substituiertes Aryl R, R', $R^1$, $R^2$ und $R^{2'}$ steht Aryl mit vorzugsweise 6 oder 10 Kohlenstoffatomen im Arylteil. Beispielhaft seien gegebenenfalls substituiertes Phenyl oder Naphthyl, insbesondere Phenyl, genannt.

Als gegebenenfalls substituiertes Aralkyl R, R', $R^1$, $R^2$ und $R^{2'}$ steht gegebenenfalls im Arylteil und/oder Alkylteil substituiertes Aralkyl mit vorzugsweise 6 oder 10, insbesondere 6 Kohlenstoffatomen im Arylteil und vorzugsweise 1 bis 4, insbesondere 1 oder 2 Kohlenstoffatomen im Alkylteil, wobei der Alkylteil geradkettig oder verzweigt sein kann. Beispielhaft seien gegebenenfalls substituiertes Benzyl und Phenylethyl genannt.

Gegebenenfalls substituiertes Aralkenyl R entspricht in seinem Arylteil dem Aralkylrest R. Es enthält im Alkenylteil vorzugsweise 2 bis 6, insbesondere 2 oder 3 Kohlenstoffatome, vorzugsweise eine Doppelbindung.

Gegebenenfalls substituiertes Aryloxy, Arylthio und Arylamino $R^1$, $R^{1'}$, $R^2$ und $R^{2'}$ enthalten vorzugsweise 6 oder 10 Kohlenstoffatome im Arylteil, wobei Phenyloxy, Naphthyloxy, Phenylthio und Naphthylthio, Phenylamino und Naphthylamino, vorzugsweise Phenyloxy, Phenylthio und Phenylamino genannt seien.

Gegebenenfalls substituiertes Aralkoxy, Aralkylthio und Aralkylamino $R^1$, $R^{1'}$, $R^2$ und $R^{2'}$ enthalten im Arylteil vorzugsweise 6 oder 10 Kohlenstoffatome, wobei Phenyl als besonders bevorzugt genannt sei. Der Alkylteil ist verzweigt oder geradkettig und enthält vorzugsweise 1 bis 4, insbesondere 1 oder 2 Kohlenstoffatome. Besonders bevorzugt ist als Aralkylteil der Benzylrest.

Im gegebenenfalls substituierten Alkylamino, $R^1$, $R^{1'}$, $R^2$ und $R^{2'}$ enthält die Aminogruppe 1 oder 2 Alkylgruppen, welche jeweils geradkettig oder verzweigt sein können und vorzugsweise 1 bis 5, insbesondere 1 bis 3 Kohlenstoffatome enthalten, wobei Methyl, Ethyl, n- und i-Propyl genannt seien. Beispielhaft seien Methylamino und Dimethylamino aufgeführt.

Als gegebenenfalls substituierte heterocyclische Reste R und R' stehen heteroparaffinische, heteroaromatische und heteroolefinische 5- bis 7gliedrige, vorzugsweise 5- oder 6gliedrige Ringe mit vorzugsweise 1 bis 3, insbesondere 1 oder 2 gleichen oder verschiedenen Heteroatomen. Als Heteroatome stehen Sauerstoff, Schwefel oder Stickstoff. Als Beispiele seien gegebenenfalls substituiertes Pyrrolidinyl, Piperidinyl, Furyl, Thiophenyl, Pyrazolyl, Imidazolyl, 1,2,3- und 1,2,4-Triazolyl, Oxazolyl, Isoxazolyl, Thiazolyl, Isothiazolyl, 1,2,3-, 1,3,4-, 1,2,4- und 1,2,5-Oxadiazolyl, Azepinyl, Pyrrolyl, Pyridyl, Piperazinyl, Pyridazinyl, Pyrimidinyl, Pyrazinyl, 1,3,5-, 1,2,4- und 1,2,3-Triazinyl, 1,2,4-, 1,3,2-, 1,3,6- und 1,2,6-Oxazinyl, Oxepinyl, Thiepinyl und 1,2,4-Diazepinyl genannt.

Die in der Definition von R, R', $R^1$, $R^{1'}$, $R^2$ und $R^{2'}$ genannten substituierten Reste können einen oder mehrere, vorzugsweise 1 bis 3, insbesondere 1 oder 2 gleiche oder verschiedene Substituenten tragen. Als Substituenten seien beispielhaft aufgeführt: Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Mono- und Dialkylamino mit jeweils 1 bis 4, vorzugsweise 1 oder 2 Kohlenstoffatomen je Alkylgruppe, wie Monomethylamino, Dimethylamino, Monoethylamino und Diethylamino; Halogenalkyl, Halogenalkylthio und Halogenalkoxy mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome vorzugsweise Fluor, Chlor oder Brom, insbesondere Fluor stehen, wie Trifluormethyl, Trifluormethoxy und Trifluormethylthio; Halogen, vorzugsweise Fluor, Chlor, Brom und Jod, insbesondere Chlor und Brom; Nitro; Alkoxycarbonyl mit vorzugsweise 1 bis 4, insbesondere 2 oder 3 Kohlenstoffatomen wie Methoxycarbonyl und Ethoxycarbonyl; und Phenoxybenzyloxycarbonyl. Im Falle von Arylteilen enthaltenden Resten können die Arylteile, z.B. die Phenylringe durch Alkylendioxygruppen substituiert sein, welche vorzugsweise 1 bis 3, insbesondere 1 oder 2 Kohlenstoffatome enthalten und durch 1 bis 4 gleiche oder verschiedene Halogenatome (Fluor, Chlor, Brom und Jod) substituiert sein können.

Halogen bedeutet (wo nicht anders erläutert) Fluor, Chlor, Brom und Jod, vorzugsweise Fluor, Chlor und Brom.

Alkandiyl, Alkandioxy-, Iminoalkoxy- oder Alkandiiminoreste in der Definition von $R^1$ und $R^2$ enthalten vorzugsweise 1 bis 3, insbesondere 1 oder 2 Kohlenstoffatome.

Die erfindungsgemäss verwendbaren Phosphorsäurecyanhydrinester der Formel Ia zeichnen sich durch hohe Wirksamkeit gegen tierische Schädlinge, insbesondere durch hohe insektizide und akarizide Wirksamkeit aus. Sie können auch in synergistischen Mischungen mit anderen Pestiziden verwendet werden. Zum Teil zeigen sie auch fungizide Wirkung, insbesondere gegen *Piricularia oryzae* in Reis. Überraschenderweise zeigen die erfindungsgemäss verwendbaren Verbindungen der Formel Ia erheblich höhere insektizide und akarizide Wirkung als bekannte Verbindungen analoger Konstitution und gleicher Wirkungsrichtung. Ebenso ist es als überraschend anzusehen, dass man die Verbindungen der Formel I nach dem erfindungsgemässen Verfahren bei kurzer Reaktionszeit in sehr guten Ausbeuten und in hoher Reinheit erhält.

Die Erfindung betrifft vorzugsweise neue Verbindungen der Formel Ia, in welcher

R' für Wasserstoff oder für einen gegebenenfalls durch Halogen, $C_1$ bis $C_4$-Alkoxy, $C_1$ bis $C_4$-Alkylthio oder $C_1$ bis $C_4$-Alkylamino substituierten Alkylrest mit 1 bis 20 Kohlenstoffatomen, für gegebenenfalls durch halogensubstituiertes $C_2$ bis $C_5$-Alkenyl oder $C_2$ bis $C_5$-Alkinyl, gegebenenfalls durch $C_1$ bis $C_4$-Alkyl, $C_2$ bis $C_4$-Alkoxycarbonyl, Phenoxybenzyloxycarbonyl und/oder halogensubstituiertes $C_3$ bis $C_8$-Cycloalkyl, für gegebenenfalls durch Halogen, gegebenenfalls durch halogensubstituiertes $C_1$ bis $C_4$-Alkyl oder gegebenenfalls durch halogensubstituiertes $C_1$ bis $C_4$-Alkoxy substituiertes Phenyl-$C_1$ bis $C_4$-alkyl, für gegebenenfalls durch Halogen, Nitro, $C_1$ bis $C_4$-Alkyl, gegebenenfalls durch halogensubstituiertes $C_1$ bis $C_4$-Alkoxy, gegebenenfalls durch halogensubstituiertes $C_1$ bis $C_4$-Alkylthio, Trifluormethyl und/oder durch gegebenenfalls halogensubstituiertes $C_1$ bis $C_2$-Alkylendioxy substituiertes Phenyl, für Furyl, Thienyl oder Pyridyl steht,

$R^{1'}$ für einen gegebenenfalls durch Halogen substituierten Rest aus der Reihe $C_1$ bis $C_5$-Alkoxy, Phenoxy, Benzyloxy, $C_1$ bis $C_5$-Alkylthio, Phenylthio, Benzylthio, $C_1$ bis $C_5$-Alkylmono- und -dialkylamino, $C_2$ bis $C_5$-Alkenylthio und $C_3$ bis $C_5$-Alkinylthio steht,

$R^{2'}$ für einen gegebenenfalls durch Halogen oder $C_1$ bis $C_4$-Alkylthio substituierten Rest aus der Reihe $C_1$ bis $C_5$-Alkyl, Phenyl, Phenoxy, Benzyloxy, $C_1$ bis $C_5$-Alkylthio, Phenylthio, Benzylthio, $C_1$ bis $C_5$-Alkylmono- und -dialkylamino, $C_2$ bis $C_5$-Alkenylthio und $C_3$ bis $C_5$-Alkinylthio steht, und

X für Sauerstoff oder Schwefel steht (wobei die zuvor aufgeführten Ausschlüsse a bis e auch hier gelten).

Halogen bedeutet hierbei jeweils Fluor, Chlor,

Brom und Jod, vorzugsweise Fluor, Chlor und Brom.

Die Erfindung betrifft insbesondere neue Verbindungen der Formel Ia, in welcher

R' für Wasserstoff oder für einen gebenenfalls durch Fluor, Chlor, Methoxy, Methylthio oder Dimethylamino substituierten Alkylrest mit 1 bis 10 Kohlenstoffatomen, für $C_2$ bis $C_5$-Alkenyl, für gegebenenfalls durch Chlor und/oder Methyl substituiertes $C_3$ bis $C_6$-Cycloalkyl, für gegebenenfalls durch Chlor oder Trifluormethoxy substituiertes Phenyl-$C_1$ bis $C_2$-alkyl, für gegebenenfalls durch Fluor, Chlor, Nitro, Methyl, Methoxy, Trifluormethyl oder Trifluormethoxy und/oder Methylendioxy substituiertes Phenyl oder für Thienyl oder Pyridyl steht,

$R^{1'}$ für einen gegebenenfalls durch Fluor oder Chlor substituierten Rest aus der Reihe $C_1$ bis $C_5$-Alkoxy, Phenoxy, Benzyloxy, $C_1$ bis $C_5$-Alkylthio und $C_1$ bis $C_5$-Alkylmono- und -dialkylamino steht,

$R^{2'}$ für einen gegebenenfalls durch Fluor, Chlor oder Ethylthio substituierten Rest aus der Reihe $C_1$ bis $C_5$-Alkyl, Phenyl, Phenoxy, $C_1$ bis $C_5$-Alkylthio, Phenylthio, Benzylthio und $C_1$ bis $C_5$-Alkylmono- und -dialkylamino steht, und

X für Sauerstoff oder Schwefel steht (wobei die zuvor angegebenen Ausschlüsse a bis e auch hier zutreffen).

Verwendet man beim erfindungsgemässen Verfahren als Ausgangsstoffe beispielsweise O-Ethylthiomethanphosphonsäureesterchlorid, Propionaldehyd und Kaliumcyanid, so kann die Reaktion dieser Verbindungen durch folgendes Formelschema skizziert werden

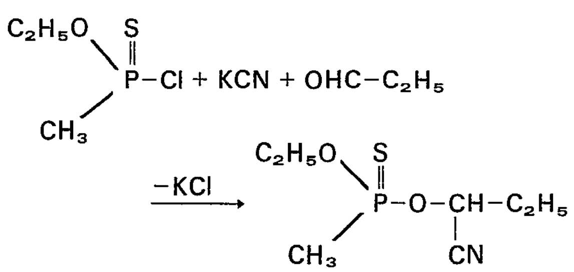


Die beim erfindungsgemässen Verfahren als Ausgangsstoffe zu verwendenden Phosphorsäurechloride sind durch Formel II definiert. In dieser Formel stehen X, $R^1$ und $R^2$ vorzugsweise bzw. insbesondere für diejenigen Reste, welche oben bei der Definition der entsprechenden Reste X, $R^{1'}$ und $R^{2'}$ in Formel I als bevorzugt bzw. als insbesondere bevorzugt angegeben sind. $R^{2'}$ steht ferner vorzugsweise für $C_1$ bis $C_5$-Alkoxy.

Als Beispiele für die Verbindungen der Formel II seien genannt:

O-Methyl-, O-Ethyl-, O-n-Propyl- und O-i-Propylmethan-, -ethan-, -propan- und -benzolphosphonsäureesterchlorid sowie die entsprechenden Thionoanalogen O,O-Dimethyl-, O,O-Diethyl-, O,O-Di-n-propyl-, O-Methyl-O-ethyl-, O-Methyl-O-n-Propyl, O-Methyl-O-i-propyl-, O-Ethyl-O-n-propyl- und O-Ethyl-O-i-propylphosphorsäurediesterchlorid sowie die entsprechenden Thionoanalogen, ferner O,S-Dimethyl-, O,S-Diethyl-, O,S-Di-n-propyl-, O,S-Di-i-propyl-, O-Methyl-S-ethyl-, O-Methyl-S-n-propyl-, O-Methyl-S-isopropyl-, O-Ethyl-S-methyl-, O-Ethyl-S-n-propyl-, O-Ethyl-S-i-propyl-, O-n-Propyl-S-methyl-, O-n-Propyl-S-ethyl-, O-n-Propyl-S-i-propyl-, O-i-Propyl-S-methyl-, O-i-Propyl-S-ethyl- und O-i-Propyl-S-n-propylthiolphosphorsäurediesterchlorid sowie die entsprechenden Thionoanalogen, ferner O-Methyl-N-methyl-, O-Methyl-N-ethyl-, O-Methyl-N-n-propyl-, O-Methyl-N-i-propyl-, O-Ethyl-N-methyl-, O-Ethyl-N-ethyl-, O-Ethyl-N-n-propyl-, O-Ethyl-N-i-propyl-, O-Propyl-N-methyl-, O-n-Propyl-N-ethyl-, O-n-Propyl-N-n-propyl-, O-n-Propyl-N-i-propyl-, O-i-Propyl-N-methyl-, O-i-Propyl-N-ethyl-, O-i-Propyl-N-n-propyl- und O-i-Propyl-N-i-propylphosphorsäureesteramidchlorid sowie die entsprechenden Thionoanalogen, ferner S-n-Propyl-N-i-propylthionothiolphosphorsäureesteramidchlorid, O-Ethyl-S-benzylthionothiolphosphorsäurediesterchlorid, S-sek.-Butylthionothiolethanphosphonsäureesterchlorid, S-n-Propylthionothiolmethanphosphonsäureesterchlorid, S-n-Propylthionothiolchlormethanphosphonsäureesterchlorid, O-Ethyl-O-(4-chlorphenyl)thionophosphorsäurediesterchlorid, O-(2,2,2-trifluorethyl)thionomethanphosphonsäureesterchlorid und O-(2,2,2-trifluorethyl)-S-n-propylthionothiolphosphorsäurediesterchlorid.

Die Verbindungen der Formel II sind bekannt oder können nach an sich bekannten Verfahren hergestellt werden vgl. „Methoden der organischen Chemie" [Houben-Weyl-Müller], 4. Aufl., Bd. 12/1 [1963], S, 415-420 und S. 560-563; Bd. 12/2 [1964], S. 274-292 und S. 607-618; Thieme-Verlag Stuttgart).

Die weiter als Ausgangsstoffe zu verwendenden Aldehyde sind durch Formel III definiert. In dieser Formel steht R vorzugsweise bzw. insbesondere für diejenigen Reste, welche oben bei der Definition von R' in Formel Ia als bevorzugt bzw. als insbesondere bevorzugt angegeben sind.

Als Beispiele für die Verbindungen der Fornel III seien genannt: Formaldehyd, Acetaldehyd, Propionaldehyd, Butyraldehyd, i-Butyraldehyd, Valeraldehyd, i-Valeraldehyd, sek.-Valeraldehyd, Capronaldehyd, i-Capronaldehyd, sek.-Capronaldehyd, Pivalaldehyd, Acrolein, Crotonaldehyd, Methoxyacetaldehyd, Methylthioacetaldehyd, Cyclohexancarbaldehyd, Benzaldehyd, 4-Chlorbenzaldehyd, 4-Methylbenzaldehyd, 3,4-Methylendioxybenzaldehyd, 4,5-Methylendioxy-2-nitrobenzaldehyd, Phenylacetaldehyd, α-Phenylpropionaldehyd, Thiophen-2-carbaldehyd, Thiophen-3-carbaldehyd, Pyridin-2-carbaldehyd und Pyridin-3-carbaldehyd.

Die Ausgangsverbindungen der Formel III sind bekannt.

In Wasser lösliche Cyanide, welche beim erfindungsgemässen Verfahren verwendet werden können, sind beispielsweise Alkalicyanide, wie Natriumcyanid und Kaliumcyanid; Natriumcyanid wird bevorzugt verwendet.

Als mit Wasser nicht mischbare Lösungsmittel

werden beim erfindungsgemässen Verfahren vorzugsweise geradkettige oder verzweigte Alkane oder Cycloalkane mit 5 bis 10 Kohlenstoffatomen, wie z.B. n-Pentan, n-Hexan, n-Heptan, n-Octan, n-Nonan, n-Decan, 2-Methylpentan, 3-Methylpentan, 2-Methylhexan, 2,2,4-Trimethylpentan, Cyclohexan, Methylcyclohexan, oder auch Methylbenzole, wie z.B. Toluol, oder Xylole, sowie auch Gemische dieser Kohlenwasserstoffe eingesetzt.

Als Phasentransferkatalysatoren werden beim erfindungsgemässen Verfahren Verbindungen verwendet, welche gewöhnlich bei Reaktionen in Zweiphasensystemen aus Wasser und mit Wasser nicht mischbaren organischen Lösungsmitteln zum Phasentransfer von Reaktanden dienen. Als solche sind vor allem Tetraalkyl- und Trialkylaralkylammoniumsalze mit vorzugsweise 1 bis 10, insbesondere 1 bis 8 Kohlenstoffatomen je Alkylgruppe, vorzugsweise Phenyl als Arylbestandteil der Aralkylgruppen und vorzugsweise 1 bis 4, insbesondere 1 oder 2 Kohlenstoffatomen im Alkylteil der Aralkylgruppen bevorzugt. Hierbei kommen vor allem die Halogenide, wie Chloride, Bromide und Jodide, vorzugsweise die Chloride und Bromide in Frage. Beispielhaft seien Tetrabutylammoniumbromid, Benzyltriethylammoniumchlorid und Methyltrioctylammoniumchlorid genannt.

Die Reaktionstemperatur wird beim erfindungsgemässen Verfahren zwischen 0 und 80, vorzugsweise zwischen 0 und 30° C, gehalten. Das Verfahren wird vorzugsweise bei Normaldruck durchgeführt.

Auf 1 mol Phosphorsäurechlorid der Formel II werden im allgemeinen zwischen 0,8 und 1,2 mol, vorzugsweise 0,9 bis 1,1 mol Aldehyd der Formel III, zwischen 1,0 und 1,5 mol, vorzugsweise 1,1 bis 1,3 mol Cyanid und zwischen 0,001 und 0,05 mol, vorzugsweise 0,01 bis 0,03 mol Katalysator eingesetzt.

In einer bevorzugten Ausführungsform des erfindungsgemässen Verfahrens werden die Ausgangsverbindungen der Formeln II und III sowie der Katalysator in dem mit Wasser nicht mischbaren Lösungsmittel gelöst, und zu dieser Lösung wird langsam eine wässerige Lösung des Cyanids gegeben, wobei gegebenenfalls zunächst durch Aussenkühlung die Reaktionstemperatur auf etwa 0 bis 10° C gebracht wird. Das komplette Reaktionsgemisch wird dann ohne Kühlen bis zum Reaktionsende gerührt.

Zur Aufarbeitung wird gegebenenfalls mit weiterem mit Wasser nicht mischbarem Lösungsmittel verdünnt, die organische Phase abgetrennt, mit Wasser gewaschen, getrocknet und filtriert. Das Filtrat wird durch Destillation unter vermindertem Druck vom Lösungsmittel befreit, wobei man das Rohprodukt als öligen Rückstand erhält. Zur Charakterisierug dient der Brechungsindex.

Die erfindungsgemäss verwendbaren Wirkstoffe eignen sich bei guter Pflanzenverträglichkeit und günstiger Warmblütertoxizität zur Bekämpfung von tierischen Schädlingen, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der *Isopoda* z.B. *Oniscus asellus, Armadillidium vulgare, Porcello scaber.*

Aus der Ordnung der *Diplopoda* z.B. *Blaniulus guttulatus.*

Aus der Ordnung der *Chilopoda* z.B. *Geophilus carpophaus, Scutigera spec.*

Aus der Ordnung der *Symphyla* z.B. *Scutigerella immaculata.*

Aus der Ordnung der *Thysanura* z.B. *Lepisma saccharina.*

Aus der Ordnung der *Collembola* z.B. *Onychiurus armatus.*

Aus der Ordnung der *Orthoptera* z.B. *Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.*

Aus der Ordnung der *Dermaptera* z.B. *Forficula auricularia.*

Aus der Ordnung der *Isoptera* z.B. *Reticulitermes spp.*

Aus der Ordnung der *Anoplura* z.B. *Phylloxera vastatrix, Pemphigus spp., Pediculus humanus corporis, Haematopinus spp., Linognathus spp.*

Aus der Ordnung der *Mallophaga* z.B. *Trichodectes spp., Damalinea spp.*

Aus der Ordnung der *Thysanoptera* z.B. *Hercinothrips fermoralis, Thrips tabaci.*

Aus der Ordnung der *Heteroptera* z.B. *Eurygaster spp., Dysdercus intermedius, Piesma quadrata, Cimex lectularius, Rhodnius prolixus, Triatoma spp.*

Aus der Ordnung der *Homoptera* z.B. *Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humili, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.*

Aus der Ordnung der *Lepidoptera* z.B. *Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.*

Aus der Ordnung der *Coleoptera* z.B. *Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.*

Aus der Ordnung der *Hymenoptera* z.B. *Diprion spp., Hoplocampa spp., Lasius spp., Monomorium pharaonis, Vespa spp.*

Aus der Ordnung der *Diptera* z.B. *Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.*

Aus der Ordnung der *Siphonaptera* z.B. *Xenopsylla cheopis, Ceratophyllus spp.*

Aus der Ordnung der *Arachnida* z.B. *Scorpio maurus, Latrodectus mactans.*

Aus der Ordnung der *Acarina* z.B. *Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psorcptes spp., Chorioptes spp., Sarcoptes spp., Tarsonemus spp., Bryobia praetiosa, Panonychus spp., Tetranychus spp.*

Die erfindungsgemäss verwendbaren Wirkstoffe können in die üblichen Formulierungen übergeführt werden, wie Lösungen, Emulsionen, Suspensionen, Pulver, Schäume, Pasten, Granulate, Aerosole, wirkstoffimprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebelformulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosoltreibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyäthylen/Fettsäure-Ester, Polyoxyäthylen/Fettalkohol-Äther, z.B. Alkylarylpolyglykoläther, Alkylsulfonate, Alkylsulfate, Arylsulfonate sowie Eiweisshydrolysate; als Dispergiermittel kommen in Frage: z.B. Ligninsulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- u. Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90%.

Die erfindungsgemäss verwendbaren Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäss verwendbaren Wirkstoffe können ferner in ihren handelsüblichen Formulierungen sowie in den aus diesen Formulierungen bereiteten Anwendungsformen in Mischung mit Synergisten vorliegen, Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,0001 und 1 Gew.-%, liegen.

Die Anwendung geschieht in einer den Anwendungsformen angepassten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäss verwendbaren Wirkstoffe eignen sich auch zur Bekämpfung von Ekto- und Endoparasiten auf dem Gebiet der Tierhaltung und Viehzucht, wobei durch die Bekämpfung der Schädlinge bessere Ergebnisse, z.B. höhere Milchleistungen, höheres Gewicht, längere Lebensdauer usw. erreicht werden können.

Die Anwendung der erfindungsgemäss verwendbaren Wirkstoffe geschieht auf diesen Gebieten in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgiessens *(pour-on and spot-on)* und des Einpuderns sowie durch parenterale Anwendung in Form beispielsweise der Injektion.

Wie bereits oben angegeben, sind die neuen Wirkstoffe erfindungsgemäss erhältlichen bekannten Wirkstoffen überlegen.

Die Wirksamkeit der erfindungsgemässen Wirkstoffe sei anhand der folgenden Beispiele erläutert (als Vergleichsverbindung wurde jeweils der vorbekannte O,O-Diethyl-O-(1-cyanoethyl)thiophosphorsäureester eingesetzt).

*Beispiel A:*

*Laphygma*-Test

Lösungsmittel: 3 Gew.-Teile Aceton
Emulgator: 1 Gew.-Teil Alkylarylpolyglykolether

Zur Herstellung einer zweckmässigen Wirkstoffzubereitung vermischt man 1 Gew.-Teil Wirkstoff mit der angegebenen Menge Lösungsmittel und der angegebenen Menge Emulgator und verdünnt das Konzentrat mit Wasser auf die gewünschte Konzentration.

Kohlblätter *(Brassica oleracea)* werden durch Tauchen in die Wirkstoffzubereitung der gewünschten Konzentration behandelt und mit Raupen des Eulenfalters *(Laphygma frugiperda)* besetzt, solange die Blätter noch feucht sind.

Nach der gewünschten Zeit wird die Abtötung in Prozent bestimmt. Dabei bedeutet 100%, dass alle Raupen abgetötet wurden; 0% bedeutet, dass keine Raupen abgetötet wurden.

Bei diesem Test zeigte nach 3 d die Vergleichsverbindung bei einer Wirkstoffkonzentration von 0,1% einen Abtötungsgrad von 0%, während unter den gleichen Bedingungen beispielsweise die Verbindungen der Herstellungsbeispiele 1, 2, 7, 8, 11, 12, 14, 15, 17, 18, 24, 25, 26, 28, 29, 32, 34, 36, 38, 41, 42 und 43 einen Abtötungsgrad von 100% zeigten.

*Beispiel B:*

*Tetranychus*-Test (resistent)

Lösungsmittel: 3 Gew.-Teile Aceton
Emulgator: 1 Gew.-Teil Alkylarylpolyglykoläther

Zur Herstellung einer zweckmässigen Wirkstoffzubereitung vermischt man 1 Gew.-Teil Wirkstoff mit der angegebenen Menge Lösungsmittel und der angegebenen Menge Emulgator und verdünnt das Konzentrat mit Wasser auf die gewünschte Konzentration.

Bohnenpflanzen *(Phaseolus vulgaris)*, die stark von allen Entwicklungsstadien der gemeinen Spinnmilbe oder Bohnenspinnmilbe *(Tetranychus urticae)* befallen sind, werden durch Tauchen in die Wirkstoffzubereitung der gewünschten Konzentration behandelt.

Nach der gewünschten Zeit wird die Abtötung in Prozent bestimmt. Dabei bedeutet 100%, dass alle Spinnmilben abgetötet wurden; 0% bedeutet, dass keine Spinnmilben abgetötet wurden.

Bei diesem Test zeigte nach 2 d bei einer Wirkstoffkonzentration von 0,1% die Vergleichsverbindung eine Abtötung von 0%, während unter gleichen Bedingungen beispielsweise die Verbindungen der Herstellungsbeispiele 1, 11, 12, 14, 17, 18, 24, 25, 26, 32, 34, 36, 38 und 43 einen Abtötungsgrad von 100% zeigten.

*Beispiel C:*

*Grenzkonzentrations-Test / Bodeninsekten*

Testinsekt: *Phorbia antigua*-Maden (im Boden)
Lösungsmittel: 3 Gew.-Teile Aceton
Emulgator: 1 Gew.-Teil Alkylarylpolyglykoläther

Zur Herstellung einer zweckmässigen Wirkstoffzubereitung vermischt man 1 Gew.-Teil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in Teilen pro million (= mg/l) angegeben wird. Man füllt den Boden in Töpfe und lässt diese bei Raumtemperatur stehen.

Nach 24 h werden die Testtiere in den behandelten Boden gegeben und nach weiteren 2 bis 7 d wird der Wirkungsgrad des Wirkstoffs durch Auszählen der toten und lebenden Testinsekten in Prozent bestimmt. Der Wirkungsgrad ist 100%, wenn alle Testinsekten abgetötet worden sind, er

ist 0%, wenn noch genau so viele Testinsekten leben wie bei der unbehandelten Kontrolle.

In einem Test bei einer Wirkstoffkonzentration von 5 ppm zeigte die Vergleichsverbindung einen Abtötungsgrad von 0%, während die Verbindungen der Herstellungsbeispiele 1, 17, 18, 29, 32, 34, 36, 38 und 43 einen Abtötungsgrad von 100% zeigten.

*Beispiel D:*

*Test mit parasitierenden Fliegenlarven*

Lösungsmittel: 35 Gew.-Teile Äthylenpolyglykolmonomethyläther

Emulgator: 35 Gew.-Teile Nonylphenolpolyglykoläther

Zur Herstellung einer zweckmässigen Wirkstoffzubereitung vermischt man 30 Gew.-Teile der betreffenden aktiven Substanz mit der angegebenen Menge Lösungsmittel, das den oben genannten Anteil Emulgator enthält und verdünnt das so erhaltene Konzentrat mit Wasser auf die gewünschte Konzentration.

Etwa 20 Fliegenlarven *(Lucilia cuprina)* werden in ein Teströhrchen gebracht, welches ca. 2 $cm^3$ Pferdemuskulatur enthält. Auf dieses Pferdefleisch werden 0,5 ml der Wirkstoffzubereitung gebracht. Nach 24 h wird der Abtötungsgrad in Prozent bestimmt. Dabei bedeuten 100%, dass alle, und 0%, dass keine Larven abgetötet worden sind.

Bei einem Test mit einer Wirkstoffkonzentration von 100 ppm zeigten beispielsweise die Verbindungen der Herstellungsbeispiele 1, 14, 17, 18, 19, 29, 32, 34, 36, 37 und 43 eine 100%ige Abtötung.

Das erfindungsgemässe Verfahren sei anhand der folgenden Herstellungsbeispiele erläutert:

*Beispiel 1:*

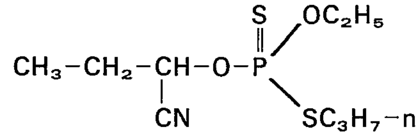

11,6 g (0,2 mol) Propanol, 43,7 g (0,2 mol) O-Ethyl-S-propyldithiophosphorsäurediesterchlorid und 1,2 g Tetrabutylammoniumbromid werden in 300 ml Hexan vorgelegt und bei einer Innentemperatur zwischen 0 und 10° C eine Lösung von 11,2 g (0,23 mol) Natriumcyanid in 20 ml Wasser unter starkem Rühren zugetropft. Nach beendeter Zugabe wird die Temperatur langsam auf 20° C erhöht und bis zum Reaktionsende weiter gerührt. Anschliessend wird die wässerige Phase abgetrennt, die organische Phase zweimal mit je 100 ml Wasser gewaschen und über Natriumsulfat getrocknet. Nach Abziehen des Lösungsmittels im Wasserstrahlvakuum und Abdestillieren schwerer flüchtiger Bestandteile bei 50° C/3 mbar erhält man als öligen Rückstand 50,5 g (95% der Theorie) O-Ethyl-O-(1-cyanopropyl)-S-propyldithiophosphorsäureester vom Brechungsindex $n_D^{20}$: 1,5120.

Analog können die in der nachstehenden Tabelle aufgeführten Verbindungen der Formel I hergestellt werden:

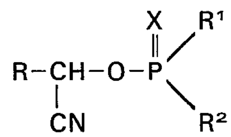

(I)

*Tabelle*

| Beispiel Nr. | R | $R^1$ | $R^2$ | X | Brechungsindex ($n_D^{20}$) |
|---|---|---|---|---|---|
| 2 | $-CH_2-SCH_3$ | $-OC_2H_5$ | $-SC_3H_7-n$ | S | 1,5336 |
| 3 | $-C_3H_7-i$ | $-SC_3H_7-n$ | $-NH-C_3H_7-i$ | S | 1,5160 |
| 4 | 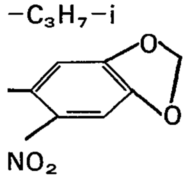 | $-OC_2H_5$ | $-SC_3H_7-n$ | S | 1,5762 |
| 5 | $-CH_3$ | $-OC_2H_5$ | $-OC_2H_5$ | S | 1,4664 |
| 6 | $-C_3H_7-i$ | $-SC_3H_7-n$ | $-OCH_2CF_3$ | S | 1,4799 |
| 7 | $-CH-CH_2CH_2CH_3$<br>\|<br>$CH_3$ | $-OC_2H_5$ | $-SC_3H_7-n$ | S | 1,4950 |
| 8 | $-CH_2OCH_3$ | $-OC_2H_5$ | $-SC_3H_7-n$ | S | 1,5109 |
| 9 | 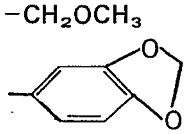 | $-OC_2H_5$ | $-SC_3H_7-n$ | S | 1,5480 |
| 10 | $-C_3H_7-i$ | $-OC_2H_5$ | 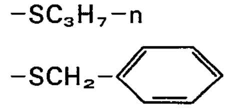 | S | 1,5412 |
| 11 | 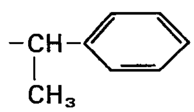 | $-C_2H_5$ | $-S-CH-CH_2CH_3$<br>\|<br>$CH_3$ | S | 1,5496 |

*Tabelle* (Fortsetzung)

| Beispiel Nr. | R | $R^1$ | $R^2$ | X | Brechungsindex ($n_D^{20}$) |
|---|---|---|---|---|---|
| 12 | 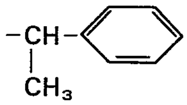 | $-CH_3$ | $-SC_3H_7-n$ | S | 1,5583 |
| 13 | 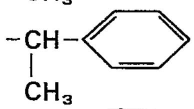 | $-CH_2Cl$ | $-SC_3H_7-n$ | S | 1,5618 |
| 14 | 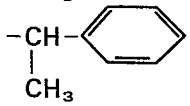 | $-OC_2H_5$ | $-SC_3H_7-n$ | O | 1,5155 |
| 15 | 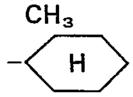 | $-OC_2H_5$ | $-SC_3H_7-n$ | S | 1,5135 |
| 16 | $-C_3H_7-i$ | $-OC_2H_5$ | 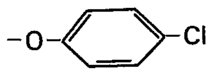 | S | 1,5215 |
| 17 | $-CH-CH_2CH_3$<br>$\vert$<br>$CH_3$ | $-OC_2H_5$ | $-SC_3H_7-n$ | S | 1,4977 |
| 18 | $-CH_2CH(CH_3)_2$ | $-OC_2H_5$ | $-SC_3H_7-n$ | S | 1,4950 |
| 19 | $-(CH_2)_3-CH_3$ | $-OC_2H_5$ | $-SC_3H_7-n$ | S | 1,4944 |
| 20 | $-(CH_2)_9-CH_3$ | $-OC_2H_5$ | $-SC_3H_7-n$ | S | 1,4890 |
| 21 | 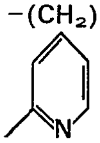 | $-OC_2H_5$ | $-SC_3H_7-n$ | S | 1,5402 |
| 22 | 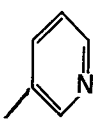 | $-OC_2H_5$ | $-SC_3H_7-n$ | S | 1,5340 |
| 23 | $-CH=CH_2$ | $-OC_2H_5$ | $-SC_3H_7-n$ | S | 1,5337 |
| 24 | 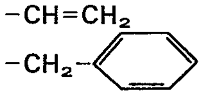 | $-OC_2H_5$ | $-SC_3H_7-n$ | S | 1,5643 |
| 25 | $-C(CH_3)_3$ | $-OC_2H_5$ | $-SC_3H_7-n$ | S | 1,5018 |
| 26 | 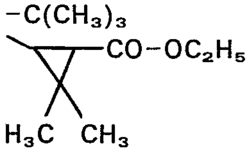 | $-OC_2H_5$ | $-SC_3H_7-n$ | S | 1,5003 |
| 27 | 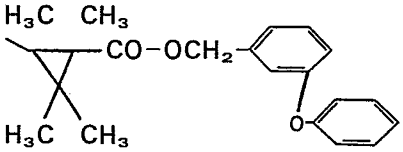 | $-OC_2H_5$ | $-SC_3H_7-n$ | S | 1,5483 |
| 28 | H | $-OC_2H_5$ | $-SC_3H_7-n$ | S | 1,5101 |
| 29 | $-CH_3$ | $-OC_2H_5$ | $-SC_3H_7-n$ | S | 1,5040 |
| 30 | 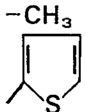 | $-OC_2H_5$ | $-SC_3H_7-n$ | S | 1,5665 |
| 31 | 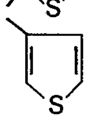 | $-OC_2H_5$ | $-SC_3H_7-n$ | S | 1,5515 |
| 32 | $-C_3H_7-i$ | $-CH_3$ | $-SC_3H_7-n$ | S | 1,5180 |
| 33 | $-C_3H_7-i$ | $-OC_2H_5$ | $-OC_2H_5$ | S | 1,4640 |
| 34 | $-C_3H_7-i$ | $-C_2H_5$ | $-S-CH-CH_2-CH_3$<br>$\vert$<br>$CH_3$ | S | 1,5150 |
| 35 | $-C_3H_7-i$ | $-OC_2H_5$ | $-NH-C_3H_7-i$ | S | 1,4567 |
| 36 | $-C_3H_7-i$ | $-OC_2H_5$ | $-SC_3H_7-n$ | S | 1,5035 |

*Tabelle* (Fortsetzung)

| Beispiel Nr. | R | $R^1$ | $R^2$ | X | Brechungsindex ($n_D^{20}$) |
|---|---|---|---|---|---|
| 37 | $-CH{=}CH-CH_3$ | $-OC_2H_5$ | $-SC_3H_7-n$ | S | 1,5290 |
| 38 | 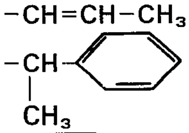 | $-OC_2H_5$ | $-SC_3H_7-n$ | S | 1,5410 |
| 39 | 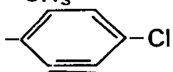 | $-OC_2H_5$ | $-OC_2H_5$ | S | 1,5303 |
| 40 | 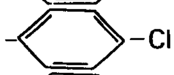 | $-C_2H_5$ | $-OC_2H_5$ | S | 1,5431 |
| 41 | 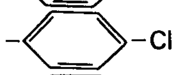 | $-OC_2H_5$ | $-SC_3H_7-n$ | S | 1,5559 |
| 42 | 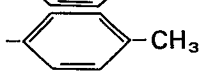 | $-OC_2H_5$ | $-SC_3H_7-n$ | S | 1,5436 |
| 43 | $-C_3H_7-i$ | $-OC_2H_5$ | $-SC_3H_7-n$ | S | 1,4990 |
| 44 | 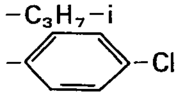 | $-CH_3$ | $-OCH_2CF_3$ | S | 1,5195 |
| 45 | 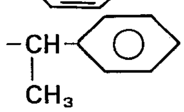 | $-N(CH_3)_2$ | $-SCH_3$ | S | 1,5453 |
| 46 | 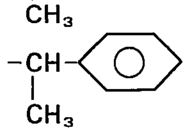 | $-SC_3H_7-n$ | $-SCH_2CH_2SC_2H_5$ | S | 1,5720 |
| 47 | 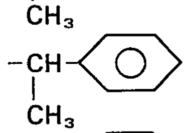 | $-OC_2H_5$ | $-SCHCH_2CH_3$<br>\|<br>$CH_3$ | S | 1,5500 |
| 48 | 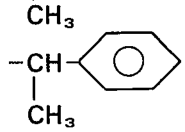 | $-OC_2H_5$ | $-SCH_2CH_2SC_2H_5$ | S | 1,5640 |
| 49 | $-CH_3$ | $-C_2H_5$ | $-S-CH-C_2H_5$<br>\|<br>$CH_3$ | S | 1,5226 |
| 50 | $-C_2H_5$ | $-C_2H_5$ | $-S-CH-C_2H_5$<br>\|<br>$CH_3$ | S | 1,5170 |
| 51 | $-CH{=}CH-CH_3$ | $-C_2H_5$ | $-S-CH-C_2H_5$<br>\|<br>$CH_3$ | S | 1,5250 |
| 52 | 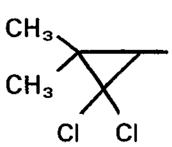 | $-OC_2H_5$ | $-OC_2H_5$ | O | 1,4575 |
| 53 | 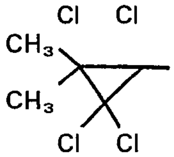 | $-OC_2H_5$ | $-SC_3H_7-n$ | O | 1,4703 |
| 54 | 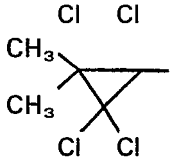 | $-OC_2H_5$ | $-SC_3H_7-n$ | S | 1,5103 |
| 55 | 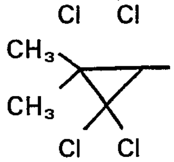 | $-OC_2H_5$ | $-OC_2H_5$ | S | 1,4858 |

*Tabelle* (Fortsetzung)

| Beispiel Nr. | R | $R^1$ | $R^2$ | X | Brechungsindex ($n_D^{20}$) |
|---|---|---|---|---|---|
| 56 | $-C(CH_3)_3$ | $-C_2H_5$ | $-S-\underset{\substack{\vert\\CH_3}}{CH}-C_2H_5$ | S | 1,5130 |
| 57 | 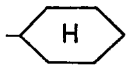 | $-C_2H_5$ | $-S-\underset{\substack{\vert\\CH_3}}{CH}-C_2H_5$ | S | 1,5218 |
| 58 | 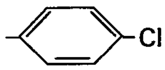 | $-C_2H_5$ | $-S-\underset{\substack{\vert\\CH_3}}{CH}-C_2H_5$ | S | 1,5643 |
| 59 | $-C_3H_7-n$ | $-C_2H_5$ | $-S-\underset{\substack{\vert\\CH_3}}{CH}-C_2H_5$ | S | 1,5083 |
| 60 | $-CH_2-CH(CH_3)_2$ | $-C_2H_5$ | $-S-\underset{\substack{\vert\\CH_3}}{CH}-C_2H_5$ | S | 1,5040 |
| 61 | $-(CH_2)_3-CH_3$ | $-C_2H_5$ | $-S-\underset{\substack{\vert\\CH_3}}{CH}-C_2H_5$ | S | 1,5035 |
| 62 | $-CH_2-OCH_3$ | $-C_2H_5$ | $-S-\underset{\substack{\vert\\CH_3}}{CH}-C_2H_5$ | S | 1,5260 |
| 63 | 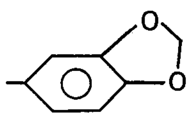 | $-C_2H_5$ | $-S-\underset{\substack{\vert\\CH_3}}{CH}-C_2H_5$ | S | 1,5668 |
| 64 | $-CH_3$ | $-OC_2H_5$ | $-SC_3H_7-n$ | O | 1,4600 |
| 65 | $-C_3H_7-i$ | $-OC_2H_5$ | $-SC_3H_7-n$ | O | 1,4565 |
| 66 | $-C_3H_7-i$ | $-C_2H_5$ | $-S-\underset{\substack{\vert\\CH_3}}{CH}-C_2H_5$ | O | 1,4805 |
| 67 | $-C_3H_7-i$ | $-C_2H_5$ | $-SC_3H_7-n$ | S | 1,5088 |
| 68 | $-H$ | $-C_2H_5$ | $-S-\underset{\substack{\vert\\CH_3}}{CH}-C_2H_5$ | S | 1,5352 |
| 69 | $-C_3H_7-i$ | $-C_2H_5$ | $-S-C_3H_7-i$ | S | 1,5069 |
| 70 | $-C_3H_7-i$ | 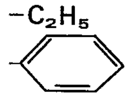 | $-S-\underset{\substack{\vert\\CH_3}}{CH}-C_2H_5$ | S | 1,5970 |
| 71 | $-C_3H_7-i$ | $-CH_3$ | $-S-\underset{\substack{\vert\\CH_3}}{CH}-C_2H_5$ | S | 1,5078 |
| 72 | $-C_3H_7-i$ | $-C_2H_5$ | $-S-C_2H_5$ | S | 1,5102 |
| 73 | $-CH_2-CH_2-$ 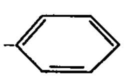 | $-CH_3$ | $-S-\underset{\substack{\vert\\CH_3}}{CH}-C_2H_5$ | S | 1,5460 |
| 74 | 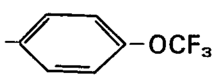 | $-C_2H_5$ | $-S-\underset{\substack{\vert\\CH_3}}{CH}-C_2H_5$ | S | 1,5097 |
| 75 | 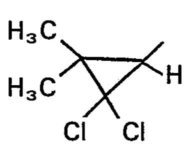 | $-C_2H_5$ | $-S-\underset{\substack{\vert\\CH_3}}{CH}-C_2H_5$ | S | 1,5182 |
| 76 | 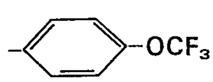 | $-C_2H_5O$ | $-SC_3H_7-n$ | S | 1,5082 |

*Tabelle* (Fortsetzung)

| Beispiel Nr. | R | $R^1$ | $R^2$ | X | Brechungsindex ($n_D^{20}$) |
|---|---|---|---|---|---|
| 77 | 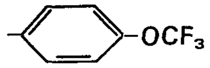 | $-C_2H_5O$ | $-SC_3H_7-n$ | O | 1,4720 |
| 78 | $-CH_2-N(CH_3)_2$ | $-C_2H_5$ | $-S-CH(CH_3)-C_2H_5$ | S | 1,5397 |
| 79 | $-CH_2-N(CH_3)_2$ | $-C_2H_5$ | $-SC_3H_7-n$ | S | 1,5443 |
| 80 | $-CH(CH_3)-C_2H_5$ | $-C_2H_5$ | $-S-CH(CH_3)-C_2H_5$ | S | 1,5053 |
| 81 | 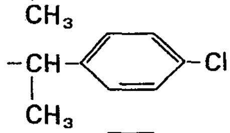 | $-C_2H_5O$ | $-SC_3H_7-n$ | S | — |
| 82 | 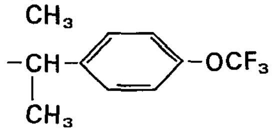 | $-C_2H_5O$ | $-SC_3H_7-n$ | S | — |

**Patentansprüche**

1. Verfahren zur Herstellung von Phosphorsäurecyanhydrinestern der Formel (I):

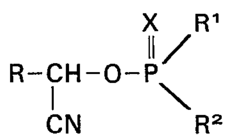

(I)

in welcher

R für Wasserstoff oder für einen gegebenenfalls substituierten Rest aus der Reihe Alkyl, Alkenyl, Alkinyl, Cycloalkyl, Cycloalkenyl, Aralkyl, Aralkenyl und Aryl oder für einen gegebenenfalls substituierten heterocyclischen Rest steht,

$R^1$ und $R^2$ gleich oder verschieden sind und einzeln für gegebenenfalls substituierte Reste aus der Reihe Alkyl, Alkenyl, Alkinyl, Aryl, Aralkyl, Alkoxy, Aryloxy, Aralkoxy, Alkylthio, Alkenylthio, Alkinylthio, Arylthio, Aralkylthio, Mono- und Dialkylamino, Arylamino, Aralkylamino oder gemeinsam für Alkandiyl, Alkandioxy, Iminoalkyloxy oder Alkandiimino stehen, und

X für Sauerstoff oder Schwefel steht,

durch die Umsetzung von Phosphorsäurechloriden der Formel (II):

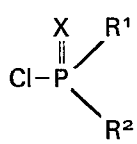

(II)

in welcher

X, $R^1$ und $R^2$ die oben angegebene Bedeutung haben,

mit Aldehyden der Formel (III):

$$R-CHO \quad (III)$$

in welcher

R die oben angegebene Bedeutung hat,

in Gegenwart angenähert äquimolarer Mengen wasserlöslicher Cyanide, in Wasser und in mit Wasser praktisch nicht mischbaren Lösungsmitteln aus der Reihe der Kohlenwasserstoffe bei Temperaturen zwischen 0 und 80° C, dadurch gekennzeichnet, dass man die Umsetzung in Gegenwart eines Phasentransferkatalysators durchführt.

2. Verfahren gemäss Anspruch 1, gekennzeichnet durch die Verwendung von Tetraalkyl- und Trialkylaralkylammoniumsalzen als Phasentransferkatalysatoren.

3. Verwendung von Phosphorsäurecyanhydrinester der Formel (Ia):

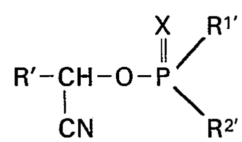

(Ia)

in welcher

R′ für Wasserstoff oder für einen Rest aus der Reihe Alkyl, Alkenyl, Alkinyl, Cycloalkyl, Aralkyl, Aryl oder für einen 5- bis 7gliedrigen heteroparaffinischen, heteroaromatischen oder heteroolefinischen Ring mit 1 bis 3 gleichen oder verschiedenen Heteroatomen, wobei die Heteroatome Sauerstoff, Schwefel und Stickstoff sind, steht,

$R^{1'}$ für einen Rest aus der Reihe Alkoxy, Aryloxy, Aralkoxy, Alkylthio, Arylthio, Aralkylthio, Mono- und Dialkylamino, Arylamino, Aralkylamino, Alkenylthio und Alkinylthio steht,

$R^{2'}$ für einen Rest aus der Reihe Alkyl, Aryl, Aralkyl, Aryloxy, Aralkoxy, Alkylthio, Arylthio, Aralkylthio, Mono- und Dialkylamino, Arylamino, Aralkylamino, Alkenylthio und Alkinylthio steht, wobei die unter den Definitionen von R′, $R^{1'}$ und $R^{2'}$ genannten Reste substituiert sein können durch Alkyl mit 1 bis 4 Kohlenstoffatomen; Alkoxy mit 1 bis 4 Kohlenstoffatomen; Alkylthio mit 1 bis 4 Kohlenstoffatomen; Mono- und Dialkylamino mit 1 bis 4 Kohlenstoffatomen je Alkylgruppe; Halogenalkyl, Halogenalkylthio und Halogenalkoxy mit 1 bis 4 Kohlenstoffatomen und 1 bis 5 Halogenatomen; Halogen; Nitro; Alkoxycarbonyl mit 2 bis 4 Kohlenstoffatomen und/oder Phenoxybenzyloxycarbonyl und wobei weiterhin im Falle von Arylteilen enthaltenden Resten R', $R^{1'}$ und $R^{2'}$ die Arylteile durch Alkylendioxygruppen subtituiert sein können, welche 1 bis 3 Kohlenstoffatome enthalten und welche ihrerseits durch 1 bis 4 Halogenatome substituiert sein können, und

X für Sauerstoff oder Schwefel steht, ausgenommen die Verbindungen, in welchen

c) X für Sauerstoff oder Schwefel, $R^{1'}$ für Ethoxy, $R^{2'}$ für n-Propylthio und R' für Phenyl stehen, und

d) X für Sauerstoff, $R^{1'}$ für Ethoxy, $R^{2'}$ für n-Butylthio und R' für Phenyl stehen, und

e) X für Sauerstoff, $R^{1'}$ für Ethoxy, $R^{2'}$ für n-Propylthio und R' für Methyl, Trichlormethyl, i-Propyl, t-Butyl, n-Pentyl, n-Heptyl, 2-Methoxypropyl, 2-Chlorphenyl, 4-Chlorphenyl, 2,4-Dichlorphenyl, 2,6-Dichlorphenyl, 2-Bromphenyl, 3-Fluorphenyl, 4-Fluorphenyl, Pentafluorphenyl, 2-Methylphenyl, 3-Trifluormethylphenyl, 2,3-Dichlor-4-methylphenyl, 2-Nitrophenyl, 3-Nitrophenyl, 2,6-Dichlor-3-nitrophenyl, 4-i-Propylphenyl, 2,4,6-Trimethoxyphenyl, 2-Pyridyl oder 6-Methyl-2-pyridyl stehen, zur Bekämpfung von Schädlingen.

4. Verwendung von Phosphorsäureanhydrinestern der Formel (Ia) gemäss Anspruch 3 zur Bekämpfung von Schädlingen, insbesondere Insekten und Spinnentieren (Acariden).

5. Verfahren zur Bekämpfung von Schädlingen, dadurch gekennzeichnet, dass man Phosphorsäurecyanhydrinester der Formel (Ia) gemäss Anspruch 3 auf die Schädlinge, vorzugsweise Insekten oder Spinnentiere (Acariden) oder ihren Lebensraum einwirken lässt.

6. Verfahren zur Herstellung von Schädlingsbekämpfungsmitteln, dadurch gekennzeichnet, dass man Phosphorsäurecyanhydrinester der Formel (Ia) gemäss Anspruch 3 mit Streckmitteln und/oder oberflächenaktiven Mitteln vermischt.

7. Phosphorsäurecyanhydrinester der Formel (Ia) gemäss Anspruch 3 mit der in Anspruch 3 angegebenen Definition der Reste R', $R^{1'}$, $R^{2'}$ und X, ausgenommen Verbindungen, in welchen

a) X für Sauerstoff, R' für Wasserstoff, $R^{2'}$ für Methyl und $R^{1'}$ für Methoxy, Ethoxy, n- und i-Propoxy, n- und i-Butoxy und Phenoxy stehen,

b) X für Sauerstoff steht und R' für Methyl, $R^{2'}$ für Ethyl und $R^{1'}$ für Ethoxy oder n-Propoxy stehen oder R' für Methyl, $R^{1'}$ für i-Propoxy und $R^{2'}$ für i-Propyl stehen oder R' für Phenyl, $R^{2'}$ für Ethyl und $R^{1'}$ für Ethoxy oder n-Propoxy stehen,

c) X für Sauerstoff oder Schwefel, $R^{1'}$ für Ethoxy, $R^{2'}$ für n-Propylthio und R' für Phenyl stehen,

d) X für Sauerstoff, $R^{1'}$ für Ethoxy, $R^{2'}$ für n-Butylthio und R' für Phenyl stehen, und

e) X für Sauerstoff, $R^{1'}$ für Ethoxy, $R^{2'}$ für n-Propylthio und R' für Methyl, Trichlormethyl, i-Propyl, t-Butyl, n-Pentyl, n-Heptyl, 2-Methoxypropyl, 2-Chlorphenyl, 4-Chlorphenyl, 2,4-Dichlorphenyl, 2,6-Dichlorphenyl, 2-Bromphenyl, 3-Fluorphenyl, 4-Fluorphenyl, Pentafluorphenyl, 2-Methylphenyl, 3-Trifluormethylphenyl, 2,3-Dichlor-4-methylphenyl, 2-Nitrophenyl, 3-Nitrophenyl, 2,6-Dichlor-3-nitrophenyl, 4-i-Propylphenyl, 2,4,6-Trimethoxyphenyl, 2-Pyridyl oder 6-Methyl-2-pyridyl stehen.

8. Phosphorsäurecyanhydrinester gemäss Anspruch 7, wobei in Formel (Ia)

R' für Wasserstoff oder für einen gegebenenfalls durch Halogen, $C_1$ bis $C_4$-Alkoxy, $C_1$ bis $C_4$-Alkylthio oder $C_1$ bis $C_4$-Alkylamino substituierten Alkylrest mit 1 bis 20 Kohlenstoffatomen, für gegebenenfalls durch halogensubstituiertes $C_2$ bis $C_5$-Alkenyl oder $C_2$ bis $C_5$-Alkinyl, gegebenenfalls durch $C_1$ bis $C_4$-Alkyl, $C_2$ bis $C_4$-Alkoxycarbonyl, Phenoxybenzyloxycarbonyl und/oder halogensubstituiertes $C_3$ bis $C_8$-Cycloalkyl, für gegebenenfalls durch Halogen, gegebenenfalls durch halogensubstituiertes $C_1$ bis $C_4$-Alkyl oder gegebenenfalls durch halogensubstituiertes $C_1$ bis $C_4$-Alkoxy substituiertes Phenyl-$C_1$-$C_2$-alkyl, für gegebenenfalls durch Halogen, Nitro, $C_1$ bis $C_4$-Alkyl, gegebenenfalls durch halogensubstituiertes $C_1$ bis $C_4$-Alkoxy, gegebenenfalls durch halogensubstituiertes $C_1$ bis $C_4$-Alkylthio, Trifluormethyl und/oder durch gegebenenfalls halogensubstituiertes $C_1$ bis $C_2$-Alkylendioxy substituiertes Phenyl, für Furyl, Thienyl oder Pyridyl steht,

$R^{1'}$ für einen gegebenenfalls durch Halogen substituierten Rest aus der Reihe $C_1$ bis $C_5$-Alkoxy, Phenoxy, Benzyloxy, $C_1$ bis $C_5$-Alkylthio, Phenylthio, Benzylthio, $C_1$ bis $C_5$-Alkylmono- und -dialkylamino, $C_2$ bis $C_5$-Alkenylthio und $C_3$ bis $C_5$-Alkinylthio steht,

$R^{2'}$ für einen gegebenenfalls durch Halogen oder $C_1$ bis $C_4$-Alkylthio substituierten Rest aus der Reihe $C_1$ bis $C_5$-Alkyl, Phenyl, Phenoxy, Benzyloxy, $C_1$ bis $C_5$-Alkylthio, Phenylthio, Benzylthio, $C_1$ bis $C_5$-Alkylmono- und -dialkylamino, $C_2$ bis $C_5$-Alkenylthio und $C_3$ bis $C_5$-Alkinylthio steht, und

X für Sauerstoff oder Schwefel steht.

9. Phosphorsäurecyanhydrinester gemäss Anspruch 7, wobei in Formel (Ia)

R' für Wasserstoff oder für einen gegebenenfalls durch Fluor, Chlor, Methoxy, Methylthio oder Dimethylamino substituierten Alkylrest mit 1 bis 10 Kohlenstoffatomen, für $C_2$ bis $C_5$-Alkenyl, für gegebenenfalls durch Chlor und/oder Methyl substituiertes $C_3$ bis $C_6$-Cycloalkyl, für gegebenenfalls durch Chlor oder Trifluormethoxy substituiertes Phenyl-$C_1$-$C_2$-alkyl, für gegebenenfalls durch Fluor, Chlor, Nitro, Methyl, Methoxy, Trifluormethyl oder Trifluormethoxy und/oder Methylendioxy substituiertes Phenyl oder für Thienyl oder Pyridyl steht,

$R^{1'}$ für einen gegebenenfalls durch Fluor oder Chlor substituierten Rest aus der Reihe $C_1$ bis $C_5$-Alkoxy, Phenoxy, Benzyloxy, $C_1$ bis $C_5$-Alkylthio und $C_1$ bis $C_5$-Alkylmono- und -dialkylamino steht,

$R^{2'}$ für einen gegebenenfalls durch Fluor, Chlor oder Ethylthio substituierten Rest aus der Reihe $C_1$ bis $C_5$-Alkyl, Phenyl, Phenoxy, $C_1$ bis $C_5$-Alkyl-

thio, Phenylthio, Benzylthio und $C_1$ bis $C_5$-Alkylmono- und -dialkylamino steht, und

X für Sauerstoff oder Schwefel steht.

10. Schädlingsbekämpfungsmittel, gekennzeichnet durch einen Gehalt an mindestens einem Phosphorsäurecyanhydrinester gemäss Anspruch 7.

## Revendications

1. Procédé de production d'esters de cyanhydrine de l'acide phosphorique de formule (I):

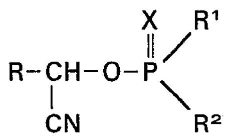

(I)

dans laquelle:

R est l'hydrogène ou un reste éventuellement substitué de la série alkyle, alcényle, alcynyle, cycloalkyle, cycloalcényle, aralkyle, aralcényle et aryle, ou un reste hétérocyclique éventuellement substitué,

$R^1$ et $R^2$ sont égaux ou différents et représentent individuellement des restes éventuellement substitués de la série alkyle, alcényle, alcynyle, aryle, aralkyle, alkoxy, aryloxy, aralkoxy, alkylthio, alcénylthio, alcynylthio, arylthio, aralkylthio, mono- et dialkylamino, arylamino, aralkylamino, ou forment ensemble un reste alcanediyle, alcanedioxy, iminoalkyloxy ou alcanediimino, et

X représente l'oxygène ou le soufre,

par réaction de chlorures d'acides phosphoriques de formule (II):

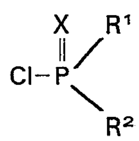

(II)

dans laquelle X, $R^1$ et $R^2$ ont la définition indiquée ci-dessus,

avec des aldéhydes de formule (III):

$$R-CHO \qquad (III)$$

dans laquelle R a la définition indiquée ci-dessus, en présence de quantités à peu près équimolaires de cyanures hydrosolubles, dans l'eau et dans des solvants pratiquement non miscibles à l'eau, de la série des hydrocarbures, à des températures comprises entre 0 et 80° C, caractérisé en ce qu'on conduit la réaction en présence d'un catalyseur de transfert de phase.

2. Procédé suivant la revendication 1, caractérisé par l'utilisation de sels de tétraalkyl- et de trialkylaralkylammonium comme catalyseur de transfert de phase.

3. Utilisation d'esters de cyanhydrine d'acide phosphorique de formule (Ia):

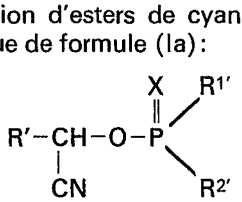

(Ia)

dans laquelle:

R' désigne l'hydrogène ou un reste de la série alkyle, alcényle, alcynyle, cycloalkyle, aralkyle, aryle ou un noyau hétéroparaffinique, hétéroaromatique ou hétérooléfinique pentagonal à heptagonal ayant 1 à 3 hétéroatomes égaux ou différents, les hétéroatomes étant des atomes d'oxygène, de soufre et d'azote,

$R^{1'}$ désigne un reste de la série alkoxy, aryloxy, aralkoxy, alkylthio, arylthio, aralkylthio, mono- et dialkylamino, arylamino, aralkylamino, alcénylthio et alcynylthio,

$R^{2'}$ est un reste de la série alkyle, aryle, aralkyle, aryloxy, aralkoxy, alkylthio, arylthio, aralkylthio, mono- et dialkylamino, arylamino, aralkylamino, alcénylthio et alcynylthio,

les restes mentionnés à propos des définitions de R', $R^{1'}$ et $R^{2'}$ peuvent être substitués par un radical alkyle ayant 1 à 4 atomes de carbone, alkoxy ayant 1 à 4 atomes de carbone, alkylthio ayant 1 à 4 atomes de carbone, mono- et dialkylamino ayant 1 à 4 atomes de carbone par groupe alkyle, halogénalkyle, halogénalkylthio et halogénalkoxy ayant 1 à 4 atomes de carbone et 1 à 5 atomes d'halogènes, halogéno, nitro, alkoxycarbonyle ayant 2 à 4 atomes de carbone et/ou phénoxybenzyloxycarbonyle et, en outre, dans le cas de restes R', $R^{1'}$ et $R^{2'}$ comportant des parties aryliques, les parties aryliques peuvent être substituées par des groupes alkylènedioxy qui contiennent 1 à 3 atomes de carbone et qui peuvent, quant à eux, être substitués par 1 à 4 atomes d'halogènes, et

X représente l'oxygène ou le soufre, excepté les composés dans lesquels:

c) X représente l'hydrogène ou le soufre, $R^{1'}$ représente le groupe éthoxy, $R^{2'}$ représente le groupe n-propylthio et R' représente le groupe phényle;

d) X est l'oxygène, $R^{1'}$ représente le groupe éthoxy, $R^{2'}$ représente le groupe n-butylthio et R' représente le groupe phényle;

e) X représente l'oxygène, $R^{1'}$ représente le groupe éthoxy, $R^{2'}$ représente le groupe n-propylthio et R' représente le groupe méthyle, trichlorométhyle, isopropyle, tertiobutyle, n-pentyle, n-heptyle, 2-méthoxypropyle, 2-chlorophényle, 4-chlorophényle, 2,4-dichlorophényle, 2,6-dichlorophényle, 2-bromophényle, 3-fluorophényle, 4-fluorophényle, pentafluorophényle, 2-méthylphényle, 3-trifluorométhylphényle, 2,3-dichloro-4-méthylphényle, 2-nitrophényle, 3-nitrophényle, 2,6-dichloro-3-nitrophényle, 4-isopropylphényle, 2,4,6-triméthoxyphényle, 2-pyridyle ou 6-méthyl-2-pyridyle,

pour combattre des parasites.

4. Utilisation d'esters d'anhydrine d'acide phosphorique de formule (Ia) suivant la revendication 3 pour combattre des parasites, notamment des insectes et des arachnides (acariens).

5. Procédé pour combattre des parasites, caractérisé en ce qu'on fait agir des esters de cyanhydrine d'acide phosphorique de formule (Ia) suivant la revendication 3 sur des parasites,

principalement des insectes ou des arachnides (acariens), ou sur leur milieu.

6. Procédé de production de compositions pesticides, caractérisé en ce qu'on mélange des esters de cyanhydrine d'acide phosphorique de formule (Ia) suivant la revendication 3 avec des diluants et/ou des agents tensio-actifs.

7. Esters de cyanhydrine d'acide phosphorique de formule (Ia) suivant la revendication 3, avec la définition indiquée dans la revendication 3 des restes R', R$^{1'}$, R$^{2'}$ et X, à l'exception des composés dans lesquels:

a) X représente l'oxygène, R' représente l'hydrogène, R$^{2'}$ représente le groupe méthyle et R$^{1'}$ représente les groupes méthoxy, éthoxy, n-propoxy, isopropoxy, n-butoxy, isobutoxy et phénoxy;

b) X représente l'oxygène et R' représente le groupe méthyle, R$^{2'}$ représente le groupe éthyle et R$^{1'}$ représente le groupe éthoxy ou n-propoxy, ou bien R' est le groupe méthyle, R$^{1'}$ est le groupe isopropoxy et R$^{2'}$ est le groupe isopropyle, ou bien R' est le groupe phényle, R$^{2'}$ est le groupe éthyle et R$^{1'}$ est le groupe éthoxy ou n-propoxy;

c) X représente l'oxygène ou le soufre, R$^{1'}$ représente le groupe éthoxy, R$^{2'}$ représente le groupe n-propylthio et R' représente le groupe phényle;

d) X est l'oxygène, R$^{1'}$ représente le groupe éthoxy, R$^{2'}$ représente le groupe n-butylthio et R' représente le groupe phényle;

e) X représente l'oxygène, R$^{1'}$ représente le groupe éthoxy, R$^{2'}$ représente le groupe n-propylthio et R' représente le groupe méthyle, trichlorométhyle, isopropyle, tertiobutyle, n-pentyle, n-heptyle, 2-méthoxypropyle, 2-chlorophényle, 4-chlorophényle, 2,4-dichlorophényle, 2,6-dichlorophényle, 2-bromophényle, 3-fluorophényle, 4-fluorophényle, pentafluorophényle, 2-méthylphényle, 3-trifluorométhylphényle, 2,3-dichloro-4-méthylphényle, 2-nitrophényle, 3-nitrophényle, 2,6-dichloro-3-nitrophényle, 4-isopropylphényle, 2,4,6-triméthoxyphényle, 2-pyridyle ou 6-méthyl-2-pyridyle.

8. Ester de cyanhydrine d'acide phosphorique suivant la revendication 7, dans lequel, dans la formule (Ia):

R' représente l'hydrogène ou un reste alkyle ayant 1 à 20 atomes de carbone éventuellement substitué par un halogène, un groupe alkoxy en $C_1$ à $C_4$, alkylthio en $C_1$ à $C_4$ ou alkylamino en $C_1$ à $C_4$, un reste alcényle en $C_2$ à $C_5$ ou alcynyle en $C_2$ à $C_5$ éventuellement substitué par un halogène, un reste cycloalkyle en $C_3$ à $C_8$ éventuellement substitué par un groupe alkyle en $C_1$ à $C_4$, alkoxycarbonyle en $C_2$ à $C_4$, phénoxybenzyloxycarbonyle et/ou un halogène, un reste phényl(alkyle en $C_1$ ou $C_2$) éventuellement substitué par un halogène, par un groupe alkyle en $C_1$ à $C_4$ éventuellement substitué par un halogène ou par un groupe alkoxy en $C_1$ à $C_4$ éventuellement substitué par un halogène, un reste phényle éventuellement substitué par un halogène, un groupe nitro, un groupe alkyle en $C_1$ à $C_4$, un groupe alkoxy en $C_1$ à $C_4$ éventuellement substitué par un halogène, un groupe alkylthio en $C_1$ à $C_4$ éventuellement substitué par un halogène, un groupe trifluorométhyle et/ou un groupe alkylènedioxy en $C_1$ ou $C_2$ éventuellement substitué par un halogène, un reste furyle, thiényle ou pyridyle,

R$^{1'}$ désigne un reste éventuellement substitué par un halogène de la série alkoxy en $C_1$ à $C_5$, phénoxy, benzyloxy, alkylthio en $C_1$ à $C_5$, phénylthio, benzylthio, mono- ou dialkylamino à groupe alkyle en $C_1$ à $C_5$, alcénylthio en $C_2$ à $C_5$ et alcynylthio en $C_3$ à $C_5$,

R$^{2'}$ désigne un reste éventuellement substitué par un halogène ou par un groupe alkylthio en $C_1$ à $C_4$, de la série alkyle en $C_1$ à $C_5$, phényle, phénoxy, benzyloxy, alkylthio en $C_1$ à $C_5$, phénylthio, benzylthio, mono- et dialkylamino à groupe alkyle en $C_1$ à $C_5$, alcénylthio en $C_2$ à $C_5$ et alcynylthio en $C_3$ à $C_5$, et

X désigne l'oxygène ou le soufre.

9. Ester de cyanhydrine d'acide phosphorique suivant la revendication 7, dans lequel, dans la formule (Ia):

R' désigne l'hydrogène ou un reste alkyle ayant 1 à 10 atomes de carbone éventuellement substitué par du fluor, du chlore, un groupe méthoxy, méthylthio ou diméthylamino, un reste alcényle en $C_2$ à $C_5$, un reste cycloalkyle en $C_3$ à $C_6$ éventuellement substitué par du chlore et/ou par un groupe méthyle, un reste phényl(alkyle en $C_1$ ou $C_2$) éventuellement substitué par du chlore ou par un groupe trifluorométhoxy, un reste phényle éventuellement substitué par du fluor, du chlore, un groupe nitro, méthyle, méthoxy, trifluorométhyle ou trifluorométhoxy et/ou méthylènedioxy, ou un reste thiényle ou pyridyle,

R$^{1'}$ est un reste éventuellement substitué par du fluor ou du chlore, de la série alkoxy en $C_1$ à $C_5$, phénoxy, benzyloxy, alkylthio en $C_1$ à $C_5$ et mono- et dialkylamino à groupe alkyle en $C_1$ à $C_5$,

R$^{2'}$ est un reste éventuellement substitué par du fluor, du chlore ou un groupe éthylthio, de la série alkyle en $C_1$ à $C_5$, phényle, phénoxy, alkylthio en $C_1$ à $C_5$, phénylthio, benzylthio et mono- et dialkylamino à groupe alkyle en $C_1$ à $C_5$, et

X désigne l'oxygène ou le soufre.

10. Compositions pesticides, caractérisées par une teneur en au moins un ester de cyanhydrine d'acide phosphorique suivant la revendication 7.

## Claims

1. Process for the preparation of cyanohydrin phosphates of the formula (I):

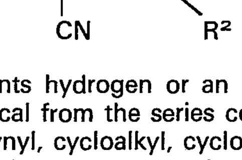

(I)

in which:

R represents hydrogen or an optionally substituted radical from the series comprising alkyl, alkenyl, alkynyl, cycloalkyl, cycloalkenyl, aralkyl, aralkenyl and aryl, or an optionally substituted heterocyclic radical,

$R^1$ and $R^2$ are identical or different and individually represent optionally substituted radicals from the series comprising alkyl, alkenyl, alkynyl, aryl, aralkyl, alkoxy, aryloxy, aralkoxy, alkylthio, alkenylthio, alkynylthio, arylthio, aralkylthio, mono- and dialkylamino, arylamino and aralkylamino, or together represent alkanediyl, alkanedioxy, iminoalkyloxy or alkanediimino, and

X represents oxygen or sulphur,

by the reaction of phosphoric acid chlorides of the formula (II):

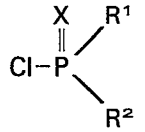

(II)

in which X, $R^1$ and $R^2$ have the meaning given above,

with aldehydes of the formula (III):

$$R-CHO \quad (III)$$

in which R has the meaning given above,

in the presence of approximately equimolar quantities of water-soluble cyanides, in water and in solvents which are virtually water-immiscible, from the series of hydrocarbons, at temperatures between 0 and 80°C, characterised in that the reaction is carried out in the presence of a phase transfer catalyst.

2. Process according to Claim 1, characterised by the use of tetraalkyl- and trialkylaralkylammonium salts as the phase transfer catalysts.

3. Use of cyanohydrin phosphates of the formula (Ia):

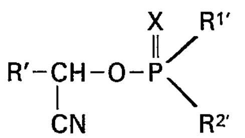

(Ia)

in which:

R' represents hydrogen or a radical from the series comprising alkyl, alkenyl, alkynyl, cycloalkyl, aralkyl and aryl or a 5- to 7-membered heteroparaffinic, heteroaromatic or hetero-olefinic ring with 1 to 3 identical or different hetero-atoms, the hetero-atoms being oxygen, sulphur and nitrogen,

$R^{1'}$ represents a radical from the series comprising alkoxy, aryloxy, aralkoxy, alkylthio, arylthio, aralkylthio, mono- and dialkylamino, arylamino, aralkylamino, alkenylthio and alkynylthio,

$R^{2'}$ represents a radical from the series comprising alkyl, aryl, aralkyl, aryloxy, aralkoxy, alkylthio, arylthio, aralkylthio, mono- and dialkylamino, arylamino, aralkylamino, alkenylthio and alkynylthio, it being possible for the radicals mentioned under the definitions for R', $R^{1'}$ and $R^{2'}$ to be substituted by alkyl with 1 to 4 carbon atoms, alkoxy with 1 to 4 carbon atoms, alkylthio with 1 to 4 carbon atoms, mono- and dialkylamino with 1 to 4 carbon atoms per alkyl group, halogenoalkyl, halogenoalkylthio and halogenoalkoxy with 1 to 4 carbon atoms and 1 to 5 halogen atoms, halogen, nitro, alkoxycarbonyl, with 2 to 4 carbon atoms and/or phenoxybenzyloxycarbonyl, and it furthermore being possible, in the case of the radicals R', $R^{1'}$ and $R^{2'}$ which contain aryl parts, for the aryl parts to be substituted by alkylenedioxy groups which contain 1 to 3 carbon atoms and which can in their turn be substituted by 1 to 4 halogen atoms, and

X represents oxygen or sulphur,

with the exception of those compounds in which:

(*c*) X represents oxygen or sulphur, $R^{1'}$ represents ethoxy, $R^{2'}$ represents n-propylthio and R' represents phenyl;

(*d*) X represents oxygen, $R^{1'}$ represents ethoxy, $R^{2'}$ represents n-butylthio and R' represents phenyl;

(*e*) X represents oxygen, $R^{1'}$ represents ethoxy, $R^{2'}$ represents n-propylthio and R' represents methyl, trichloromethyl, i-propyl, t-butyl, n-pentyl, n-heptyl, 2-methoxypropyl, 2-chlorophenyl, 4-chlorophenyl, 2,4-dichlorophenyl, 2,6-dichlorophenyl, 2-bromophenyl, 3-fluorophenyl, 4-fluorophenyl, pentafluorophenyl, 2-methylphenyl, 3-trifluoromethylphenyl, 2,3-dichloro-4-methylphenyl, 2-nitrophenyl, 3-nitrophenyl, 2,6-dichloro-3-nitrophenyl, 4-i-propylphenyl, 2,4,6-trimethoxyphenyl, 2-pyridyl or 6-methyl-2-pyridyl,

for combating pests.

4. Use of cyanohydrin phosphates of the formula (Ia) according to Claim 3 for combating pests, in particular insects and acarids.

5. Process for combating pests, characterised in that cyanohydrin phosphates of the formula (Ia) according to Claim 3 are allowed to act on the pests, particularly insects or acarids, or their habitat.

6. Process for the preparation of pest-combating agents, characterised in that cyanohydrin phosphates of the formula (Ia) according to Claim 3 are mixed with extenders and/or surface-active agents.

7. Cyanohydrin phosphates of the formula (Ia) according to Claim 3 with the definition of radicals R', $R^{1'}$, $R^{2'}$ and X given in Claim 3, with the exception of compounds in which:

(*a*) X represents oxygen, R' represents hydrogen, $R^{2'}$ represents methyl and $R^{1'}$ represents methoxy, ethoxy, n- and i-propoxy, n- and i-butoxy and phenoxy;

(*b*) X represents oxygen and R' represents methyl, $R^{2'}$ represents ethyl and $R^{1'}$ represents ethoxy or n-propoxy, or R' represents methyl, $R^{1'}$ represents i-propoxy and $R^{2'}$ represents i-propyl, or R' represents phenyl, $R^{2'}$ represents ethyl and $R^{1'}$ represents ethoxy or n-propoxy;

(*c*) X represents oxygen or sulphur, $R^{1'}$ represents ethoxy, $R^{2'}$ represents n-propylthio and R' represents phenyl;

(*d*) X represents oxygen, $R^{1'}$ represents ethoxy, $R^{2'}$ represents n-butylthio and R' represents phenyl;

(*e*) X represents oxygen, $R^{1'}$ represents ethoxy, $R^{2'}$ represents n-propylthio and R' represents methyl, trichloromethyl, i-propyl, t-butyl, n-pentyl, n-heptyl, 2-methoxypropyl, 2-chlorophenyl, 4-chlorophenyl, 2,4-dichlorophenyl, 2,6-dichlorophenyl, 2-bromophenyl, 3-fluorophenyl, 4-fluorophenyl, pentafluorophenyl, 2-methylphenyl, 3-trifluoromethylphenyl, 2,3-dichloro-4-methylphenyl, 2-nitrophenyl, 3-nitrophenyl, 2,6-dichloro-3-nitrophenyl, 4-i-propylphenyl, 2,4,6-trimethoxyphenyl, 2-pyridyl or 6-methyl-2-pyridyl.

8. Cyanohydrin phosphates according to Claim 7, wherein in formula (Ia):

R′ represents hydrogen or an alkyl radical which has 1 to 20 carbon atoms and is optionally substituted by halogen, $C_1$-$C_4$-alkoxy, $C_1$-$C_4$-alkytlhio or $C_1$-$C_4$-alkylamino, optionally halogen-substituted $C_2$-$C_5$-alkenyl or $C_2$-$C_5$-alkynyl, $C_3$-$C_8$-cycloalkyl which is optionally substituted by $C_1$-$C_4$-alkyl, $C_2$-$C_4$-alkoxycarbonyl, phenoxybenzyloxycarbonyl and/or halogen, phenyl-$C_1$-$C_2$-alkyl which is optionally substituted by halogen, optionally halogen-substituted $C_1$-$C_4$-alkyl or optionally halogen-substituted $C_1$-$C_4$-alkoxy, phenyl which is optionally substituted by halogen, nitro, $C_1$-$C_4$-alkyl, optionally halogen-substituted $C_1$-$C_4$-alkoxy, optionally halogen-substituted $C_1$-$C_4$-alkylthio, trifluoromethyl and/or by optionally halogen-substituted $C_1$-$C_2$-alkylenedioxy, or furyl, thienyl or pyridyl,

$R^{1\prime}$ represents an optionally halogen-substituted radical from the series comprising $C_1$-$C_5$-alkoxy, phenoxy, benzyloxy, $C_1$-$C_5$-alkylthio, phenylthio, benzylthio, $C_1$-$C_5$-alkyl-mono- and -dialkylamino, $C_2$-$C_5$-alkenylthio and $C_3$-$C_5$-alkynylthio,

$R^{2\prime}$ represents a radical, which is optionally substituted by halogen or $C_1$-$C_4$-alkylthio, from the series comprising $C_1$-$C_5$-alkyl, phenyl, phenoxy, benzyloxy, $C_1$-$C_5$-alkylthio, phenylthio, benzylthio, $C_1$-$C_5$-alkyl-mono- and -dialkylamino, $C_2$-$C_5$-alkenylthio and $C_3$-$C_5$-alkinylthio, and

X represents oxygen or sulphur.

9. Cyanohydrin phosphates according to Claim 7, wherein in formula (Ia):

R′ represents hydrogen or an alkyl radical which has 1 to 10 carbon atoms and is optionally substituted by fluorine, chlorine, methoxy, methylthio or dimethylamino, $C_2$-$C_5$-alkenyl, $C_3$-$C_6$-cycloalkyl which is optionally substituted by chlorine and/or methyl, phenyl-$C_1$-$C_2$-alkyl which is optionally substituted by chlorine or trifluoromethoxy, phenyl which is optionally substituted by fluorine, chlorine, nitro, methyl, methoxy, trifluoromethyl or trifluoromethoxy and/or methylenedioxy, or thienyl or pyridyl,

$R^{1\prime}$ represents a radical, which is optionally substituted by fluorine or chlorine, from the series comprising $C_1$-$C_5$-alkoxy, phenoxy, benzyloxy, $C_1$-$C_5$-alkylthio and $C_1$-$C_5$-alkyl-mono- and -dialkylamino,

$R^{2\prime}$ represents a radical, which is optionally substituted by fluorine, chlorine or ethylthio, from the series comprising $C_1$-$C_5$-alkyl, phenyl, phenoxy, $C_1$-$C_5$-alkylthio, phenylthio, benzylthio and $C_1$-$C_5$-alkyl-mono- and -dialkylamino, and

X represents oxygen or sulphur.

10. Pest-combating agents, characterised in that they contain at least one cyanohydrin phosphate according to Claim 7.